# EUROPÄISCHE PATENTANMELDUNG

(11) **EP 1 150 033 A2**
(43) Veröffentlichungstag der Anmeldung: **31.10.2001**
(21) Anmeldenummer: 01110290.2
(22) Anmeldetag: 26.04.2001
(51) Int. Cl.: F16D 67/04

(54) **Kupplungs-Brems-Kombination**

(30) Priorität: 29.04.2000 DE 10021130
(71) Anmelder: Ortlinghaus-Werke GmbH, 42929 Wermelskirchen (DE)
(72) Erfinder: Koch, Jürgen, 42929 Wermelskirchen (DE)
(74) Vertreter: Mentzel, Norbert, Dipl.-Phys.

(57) **Zusammenfassung**

Bei einer Kupplungs-Brems-Kombination ist außer einem federbelasteten Hauptkolben (31) auch noch ein seinerseits federbelasteter Hilfskolben (32) vorgesehen. Beide Kolben werden durch das gleiche Druckmedium gesteuert, wodurch sie aus ihrer Anlage an einer Bremsscheibe (10) zur Anlage an einer Kupplungsscheibe (20) gebracht werden. Um sogenannte Offenzeiten zu mindern oder ganz zu beseitigen wird vorgeschlagen, den Hilfskolben, wenn kein Mediendruck vorliegt, aufgrund seiner Hilfsfederkraft in Richtung der Bremsscheibe vom Hauptkolben frei wegbewegbar zu machen. Bei Erreichen eines bestimmten Anfangsdrucks beginnt sich der Hauptkolben gegen seine Hauptfederbelastung in Richtung der Kupplungsscheibe zu bewegen, aber der Hilfskolben verbleibt noch in seiner Andrucklage an der Bremsscheibe. Dies ändert sich erst bei höherem Mediendruck, wenn der Hauptkolben mit Sicherheit einen kupplungswirksamen Andruck auf die Kupplungsscheibe ausübt. Erst bei weiter wachsendem Mediendruck bewegt sich der Hilfskolben gegen dessen Hilfsfederkraft von der Bremsscheibe weg in Richtung auf den Hauptkolben.

## Beschreibung

Die Erfindung richtet sich auf eine Kupplungs-Brems-Kombination der im Oberbegriff des Anspruches 1 angegebenen Art. Bei der Umsteuerung des Hauptkolbens zwischen der Bremslage einerseits und der Kupplungslage andererseits bzw. umgekehrt beendet der Kolben seine Andruckwirkung an der einen Scheibe, bevor er einen Andruck auf die gegenüberliegende Scheibe ausübt. Durch diese zeitliche Differenz, die nachfolgend kurz "Offenzeit" bezeichnet werden soll, können sich auf den Abtrieb der Kombination einwirkende Lastmomente störend auswirken. Während der Offenzeit üben die Lastmomente eine Zwangsbewegung auf den Abtrieb aus. Eine solche unerwünschte Bewegung kann auch Störungen oder Beschädigungen der mit der Kombination versehenen Vorrichtung führen.

Bei der bekannten Kombination der im Oberbegriff des Anspruches 1 angegebenen Art (DE 44 07 943 A1) wurde beim Umschalten vom Bremsen auf das Kuppeln zunächst der Hilfskolben bewegt, bevor die Bremse gelöst wurde. Er geht in eine Bereitschaftsposition unmittelbar vor die Kupplung, weshalb der Hilfskolben bei der Bewegung des Hauptkolbens mit der Kupplung in Kontakt gelangt. Man erhält dadurch ein sanftes Einkuppeln, weil die kleinere Kolbenfläche des Hilfskolbens eine geringere Kraft aufbringt, die sich erst erhöht, wenn der Hauptkolben die Bewegung des Hilfskolbens eingeholt hat und mit seiner gesamten größeren Kolbenfläche gegen die Kupplung drückt. Das vorbeschriebene Problem der Offenzeit wurde dadurch nicht gelöst.

Der Erfindung liegt die Aufgabe zugrunde, eine Kombination der im Oberbegriff des Anspruches 1 genannten Art zu entwickeln, die Auswirkungen von Lastmomenten während der Offenzeit wenigstens mindert. Dies wird erfindungsgemäß durch die im Kennzeichen des Anspruches 1 angegebenen Maßnahmen erreicht, denen folgende besondere Bedeutung zukommt.

Bei der Erfindung wird die Offenzeit weitgehend beseitigt. Geht man von der Bremsstellung der Kombination aus und übt man dann einen Mediendruck in der Kombination aus, so bewegt sich zwar der Hauptkolben von der Bremsscheibe weg, doch ist in dieser Anfangsphase die Bremsscheibe noch von der Hilfsfederkraft vom Hilfskolben belastet. Es wird noch ein Bremsmoment ausgeübt. Dies hält mindestens so lange an, bis der Hauptkolben bei weiter ansteigenden Mediendruck an der gegenüberliegenden Kupplungsscheibe zur Anlage gekommen ist. Dann wird, aufgrund des steigenden Mediendrucks, sich schließlich auch der Hilfskolben von der Bremsscheibe abheben und diese freigeben. Dann liegt die Kupplungssituation mit der Kupplungsscheibe vor. Das Entsprechende ergibt sich beim Bremsvorgang, wenn, ausgehend von der Kupplungssituation, der Mediendruck nachlässt. Dann laufen die Vorgänge in spiegelbildlicher Weise ab.

Das hat zur Folge, dass in jeder Phase der Umsteuerung zwischen der Kupplungsund Bremssituation mindestens einer der beiden Kolben mit einer der beiden Scheiben in Berührung steht. Damit lässt sich die Offenzeit bei der Umsteuerung ganz beseitigen. Unerwünschte Lastmomente werden wenigstens in ihren Wirkungen gemindert, möglichst aber unschädlich gemacht. Aus Sicherheitsgründen empfiehlt es sich während der Umsteuerung die Berührungen der beiden Kolben an den beidseitigen Scheiben sich zeitlich überschneiden zu lassen.

Weitere Maßnahmen und Vorteile der Erfindung ergeben sich aus der nachfolgenden Beschreibung und den Zeichnungen. In den Zeichnungen ist die Erfindung schematisch in einem Ausführungsbeispiel dargestellt. Es zeigen:
- Fig. 1: einen perspektivischen Halbschnitt der wesentlichsten Teile der erfindungsgemäßen Kombination,
- Fig. 2: eine Endansicht der in Fig. 1 gezeigten Kombination, wobei nur die wesentlichen Bauteile gezeigt sind,
- Fig. 3: einen Axialschnitt durch die Kombination von Fig. 1, wenn die Bremse eingeschaltet ist,
- Fig. 4: in einer der Fig. 3 entsprechenden Darstellung die Kombination in der Phase ihrer Umsteuerung zwischen ihrer Bremslage in die Kupplungslage,
- Fig. 5,: wieder in gleicher Darstellung wie Fig. 3, die Kombination bei eingeschalteter Kupplung und
- Fig. 6: das Arbeits-Diagramm der erfindungsgemäßen Kombination für den Mediendruck in Abhängigkeit von der Zeit.

In der Kupplungs-Brems-Kombination, die nachfolgend kurz "Kombination" genannt werden soll, sind anstelle von einzelnen Scheiben Lamellenpakete 10, 11 bzw. 20, 21 vorgesehen, die beim Bremsen bzw. Kuppeln zur Wirkung kommen.

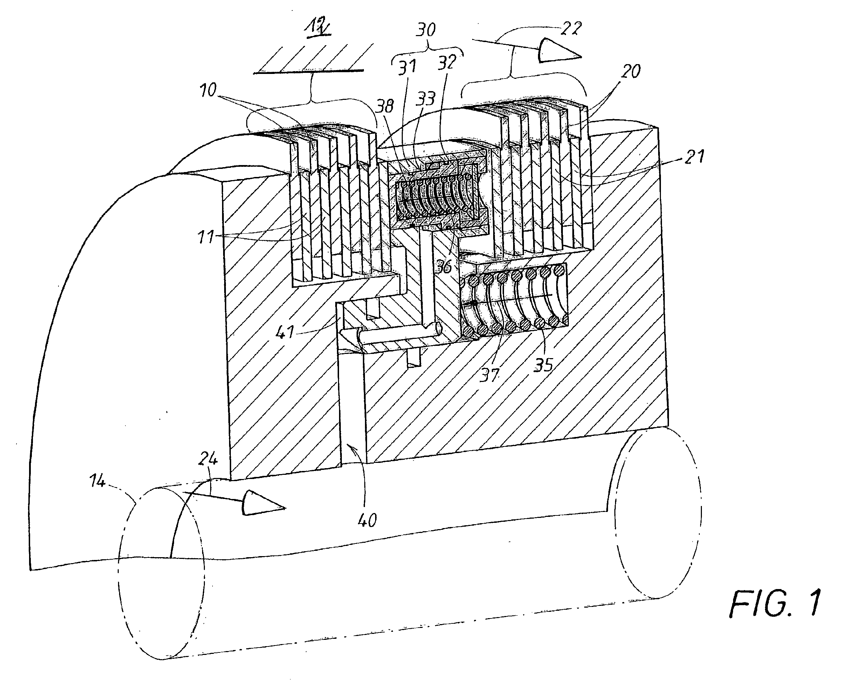

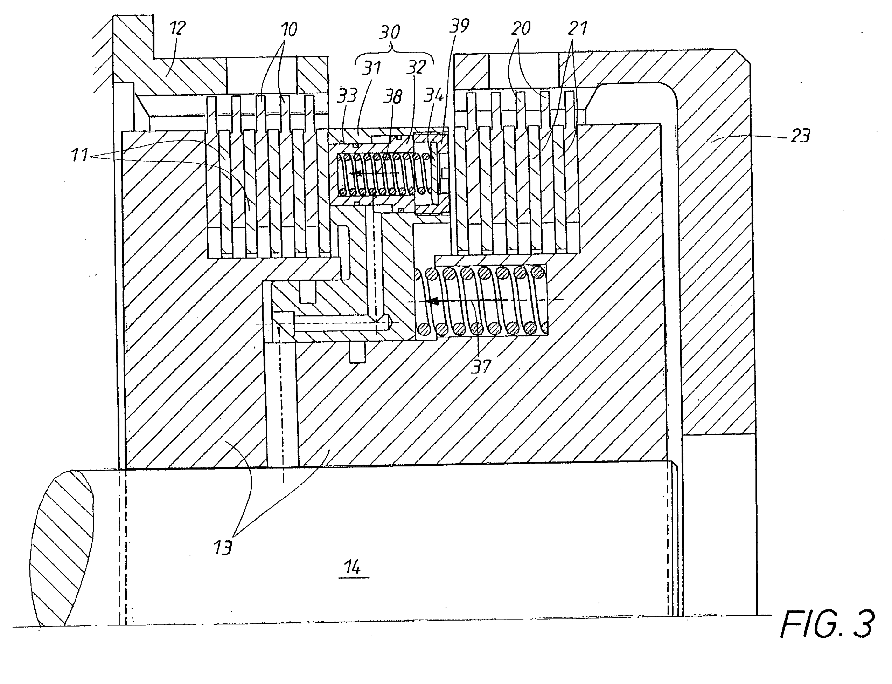

Das in Fig. 1 schematisch angedeutete Antriebsmoment 22 wird von einem Außenmitnehmer 23 gemäß Fig. 3 auf damit drehfest verbundene äußere Kupplungslamellen 20 übertragen, die aber in der dargestellten Bremslage gegenüber inneren Kupplungslamellen 21 frei laufen. Die inneren Kupplungslamellen 21 sind drehfest mit einem Innenmitnehmer 13 verbunden, der, ebenfalls in drehfester Verbindung, die zu dem anderen Lamellenpaket gehörenden inneren Bremslamellen 11 trägt. In der Bremslage von Fig. 3 sind die inneren Bremslamellen 11 in Andruck mit äußeren Bremslamellen 10, die in einem ortsfesten Träger 12 sitzen. Im Bremsfall wird ein axialer Druck auf das Brems-Lamellenpaket 10, 11 ausgeübt. Dies geschieht durch eine Kolben-Kombination 30, die folgenden besonderen Aufbau hat.

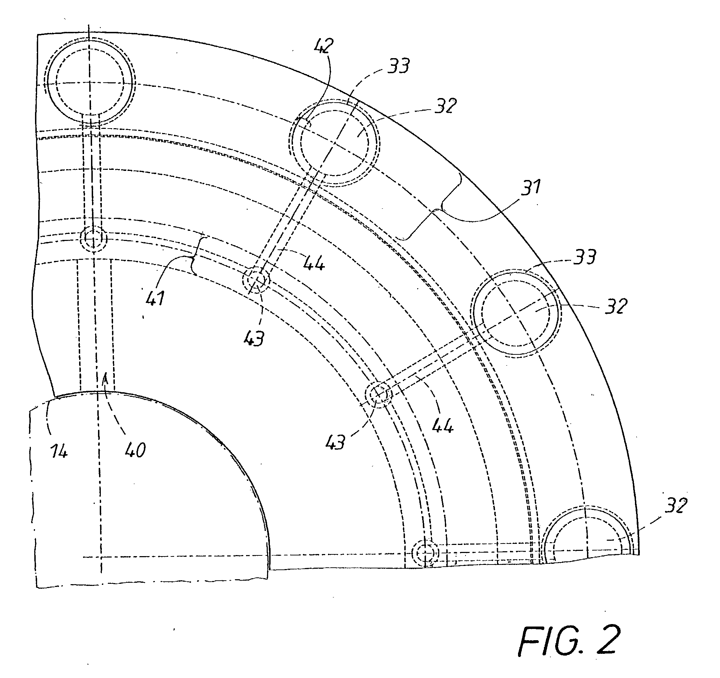

Die Kolben-Kombination 30 ist in einer axialen Lücke zwischen den beiden Lamellenpaketen 10, 11 einerseits und 20, 21 andererseits angeordnet. Wie Fig. 1 und 2 zeigen, besteht die Kolben-Kombination 30 aus einem ringförmigen Hauptkolben 31 und einer Schar von Hilfskolben 32, die in Bohrungen 33 des Hauptkolbens 31 angeordnet sind. Beide Kolbentypen 31, 32 haben unterschiedliche Kolbenflächen und zueinander unterschiedliche Federkräfte 37, 38. Der Hauptkolben 31 wird von einer Vielzahl von Druckfedern 35 belastet, welche summativ die Hauptfederkraft 37 erzeugen. Jeder der Hilfskolben 32 ist topfartig gestaltet und nimmt, wie Fig. 3 erkennen lässt, am Topfboden das eine Ende einer Hilfsdruckfeder 36 auf. Diese Feder 36 erzeugt eine Hilfsfederkraft 38, weil sich ihr anderes Federende an einer im Hauptkolben 31 axialfesten Endscheibe 34 abstützt. Diese Endscheibe 34 wird von einer im Inneren der Bohrung verschraubbaren Begrenzungsbuchse 39 festgehalten. In der Bremslage von Fig. 3 wird das bremsseitige Lamellenpaket 10, 11 sowohl vom Hauptkolben 31 und dessen Hauptdruckfederkraft 37, als auch von der Schar der Hilfskolben 32 mit den jeweiligen Hilfsfederkräften 38 zusammengedrückt. Deshalb ruht der Innenmitnehmer 13 am ortsfesten Träger 12. Das Antriebsmoment 22 kann nicht übertragen werden.

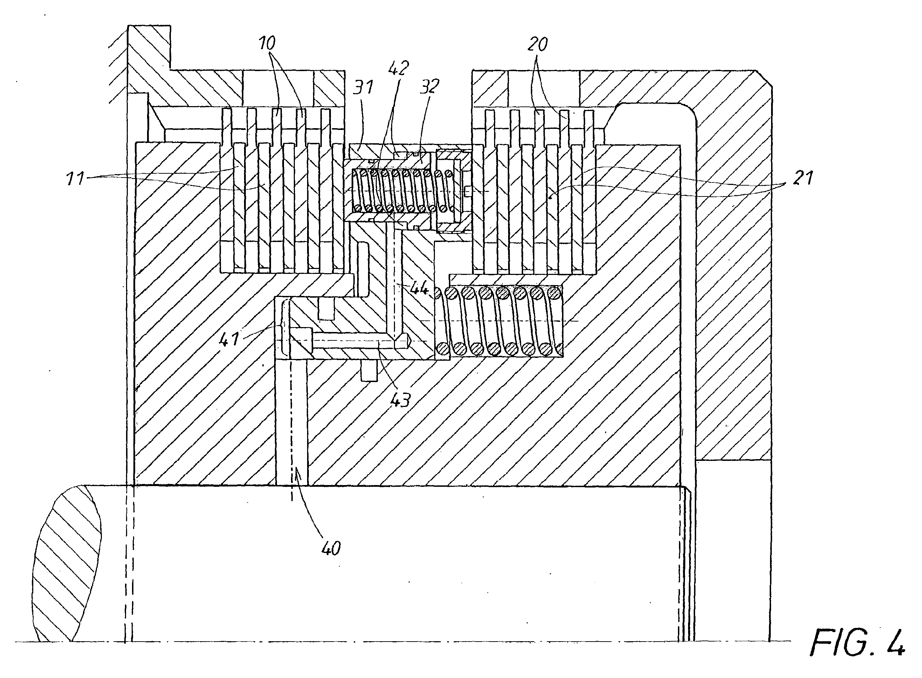

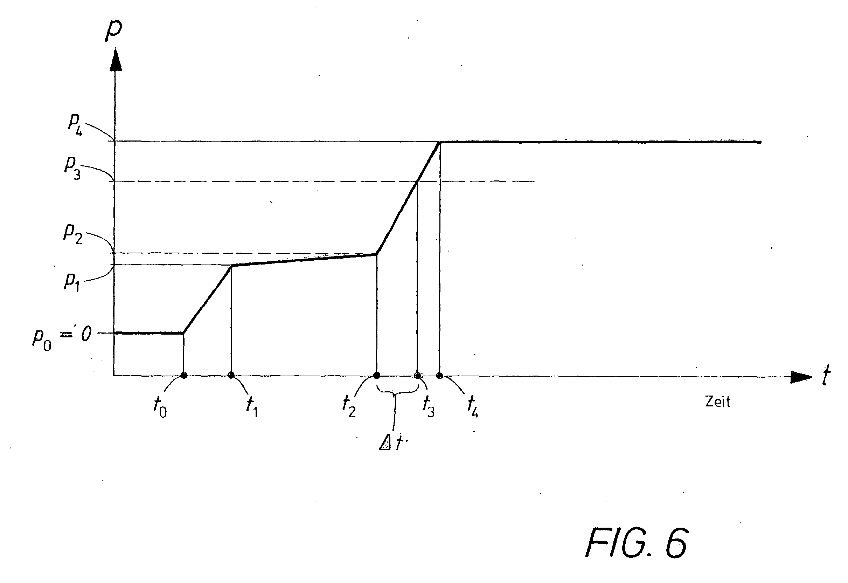

Zur Steuerung beider Kolben 31, 32 dient die gleiche Drucksteuerung 40. Diese Steuerung 40 umfasst im Bereich der Kombination einen aus Fig. 2 und 4 ersichtlichen ringförmigen Druckraum 41 für den Hauptkolben 31 und von dort, über axiale und radiale Stichkanäle 43, 44 verbundene diversen Druckräume 42 der einzelnen Hilfskolben 32 erreicht. Die sich bei Einleitung des Mediendrucks ergebenden Verhältnisse sind in ihrer zeitlichen Abfolge aus dem Druck-Zeit-Diagramm von Fig. 6 zu entnehmen.

Gemäß Fig. 6 liegt vor dem Zeitpunkt t₀ ein Mediendruck Null vor, was die "Bremslage" der Kombination kennzeichnet. Bei t₀ wird der Mediendruck im Drucksystem 40 eingeschaltet. Im Zeitpunkt t₁ ist der Anfangsdruck p₁ erreicht, welcher dem Quotienten aus der Hauptfederkraft 37 und dem Kolbenquerschnitt des Hauptkolbens 31 entspricht. Von da ab beginnt sich der Hauptkolben 32 von dem Brems-Lamellenpaket 10, 11 zu lösen und bewegt sich auf das gegenüberliegende Kupplungs-Lamellenpaket 20, 21 zu. Die Hilfsfederkraft 38 hält aber die Schar der Hilfskolben 32 noch im Andruck am Brems-Lamellenpaket 10, 11. Vom Zeitpunkt t₁ an steigt der Druck bis zum Zeitpunkt t₂ flach an. In der Zwischenlage zur Zeit t₂ sind die Hilfskolben 32 immer noch im Andruck an dem Brems-Lamellenpaket 10, 11.

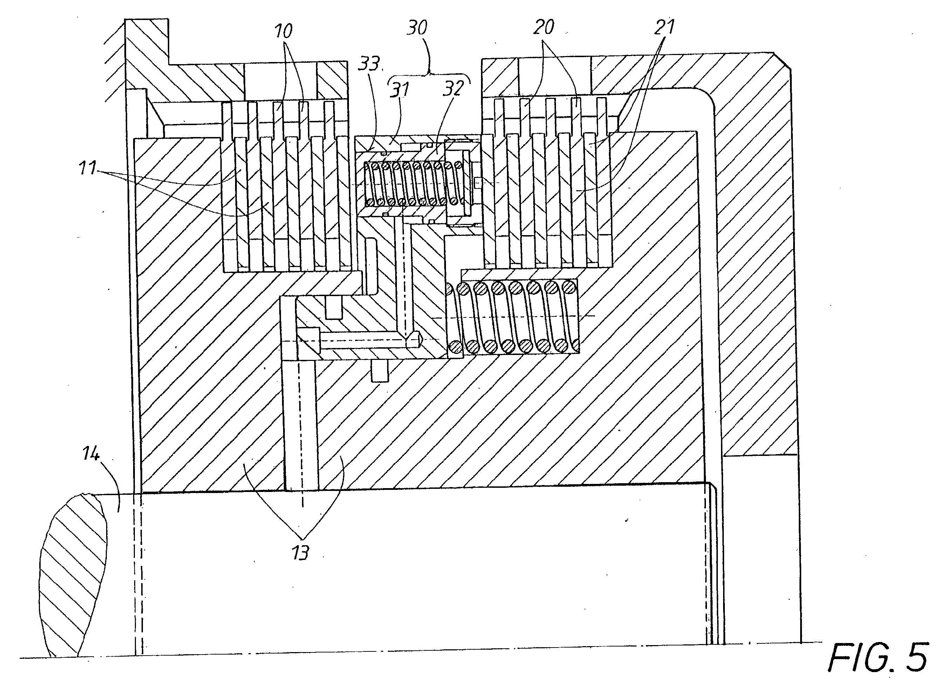

Diese Zwischenlage ist in Fig. 4 verdeutlicht. Während der Hauptkolben 32 seinen Kolbenweg durchlaufen hat, befindet sich der Hilfskolben 32 immer noch in seiner aus Fig. 3 ersichtlichen Ausgangslage. Dies ändert sich erst bei weiterem Anstieg des Mediendrucks im Drucksystem 40. Nach t₂ kommt es wieder zu einem steileren Druckanstieg. Im Zeitpunkt t₃ ist ein ausreichend hoher Mediendruck p₃ erreicht, von wo ab sich auch der Hilfskolben 32 von dem Bremslamellenpaket 10, 11 zu entfernen beginnt. Dieser Übergangsdruck p₃ hängt ab vom Verhältnis der Hilfsfederkraft 38 zum Kolbenquerschnitt der Hilfskolben 32. Der volle Mediendruck wird erst ist im Zeitpunkt t₄ erreicht. Dann sind die Hilfskolben 32 in den Hauptkolben 31 ganz eingefahren. Diese Verhältnisse sind in Fig. 5 zu erkennen.

In Fig. 5 ist das Bremslamellenpaket 10, 11 von der Kolben-Kombination 30 frei. Der Hilfskolben 32 befindet sich in seiner Bohrung 33 im Hauptkolben 31. Der Hauptkolben 31 ist, wie bereits in der Übergangsphase von Fig. 4, mit seiner Kolbenfläche in Andruck am Kupplungslamellenpaket 20, 21, doch wirkt, jetzt in Fig. 5, erst der volle Mediendruck. Die Kupplung ist eingeschaltet. In dieser Kupplungslage wird das erläuterte Antriebsmoment 22 vom Innenmitnehmer 13 auf eine damit drehfest verbundene Abtriebswelle 14 übertragen. Dabei drehen sich die vom Innenmitnehmer 13 mitgenommenen inneren Bremslamellen 11 frei zwischen den ruhenden äußeren Bremslamellen 10. An der Abtriebswelle 14 wird ein aus Fig. 11 ersichtliches Abtriebsmoment 24 abgegeben.

Wie aus Fig. 6 bei t₃ einerseits und t₂ andererseits zu ersehen ist, beginnt sich der Hilfskolben 32 erst bei t₃ vom Brems-Lamellenpaket 10, 11 abzuheben, obwohl die Anlage des Hauptkolbens 31 am Kupplungspaket 20, 21 bereits früher, nämlich im Zeitpunkt t₂ erfolgt ist. Es kommt hier zu einer zeitlichen Überschneidung Δt dieser beiden Vorgänge, was aus Sicherheitsgründen empfehlenswert ist. Dadurch werden nämlich anfallende Toleranzen berücksichtigt. Theoretisch könnte diese Überschneidung Δt gegen Null gehen.

Ausgehend von der Kupplungslage gemäß Fig. 5 laufen die Vorgänge in spiegelbildlicher Weise, wenn eine Umsteuerung auf den Bremsfall von Fig. 3 erfolgen soll. Bevor der Hauptkolben 31 sich von dem Kupplungs-Lamellenpaket 20, 21 zu entfernen beginnt, fährt der Hilfskolben 32 aus und berührt in der Übergangsphase von Fig. 4 bereits die Bremse 10, 11, während der Hauptkolben 31 noch mit verringertem Andruck an der Kupplung 20, 21 anliegt. Das ändert sich erst in einem späteren Zeitpunkt wo, wie vorausgehend bei t₁ erläutert, der Hauptkolben 31 das Brems-Lamellenpaket 10, 11 erreicht hat. Es kommen erst die Hilfsfederkräfte 38 und dann die Hauptfederkräfte 37 an der Bremse 10, 11 zur Entfaltung.

Die an den Lamellenpaketen 10, 11 bzw. 20, 21 anfallende Wärme wird durch ein Kühlmittel abgeführt. Das Kühlmittel kann gasförmig oder eine Flüssigkeit sein und ist nicht näher dargestellt.

### Bezugszeichenliste :

- 10: Brems-Lamellenpaket, äußere Brems-Lamelle
- 11: Brems-Lamellenpaket, innere Brems-Lamelle
- 12: ortsfester Träger für 10
- 13: Innenmitnehmer
- 14: Abtriebswelle

- 20: Kupplungs-Lamellenpaket, äußere Kupplungs-Lamelle
- 21: Kupplungs-Lamellenpaket, innere Kupplungs-Lamelle
- 22: Antriebsmoment
- 23: Außenmitnehmer
- 24: Abtriebsmoment

- 30: Kolben-Kombination
- 31: Hauptkolben
- 32: Hilfskolben
- 33: Bohrung in 31 für 32
- 34: Endscheibe
- 35: Hauptdruckfeder für 31
- 36: Hilfsdruckfeder für 32
- 37: Hauptfederkraft für 31
- 38: Hilfsfederkraft für 32
- 39: Begrenzungsbuchse für 36
- 40: Drucksteuerung, Drucksystem
- 41: Druckraum für 31
- 42: Druckraum für 32
- 43: axialer Stichkanal in 31
- 44: radialer Stichkanal in 31

- t₀: Zeitpunkt der Druckeinschaltung
- t₁: Zeitpunkt für p1
- t₂: Zeitpunkt für p2
- t₃: Zeitpunkt für p3
- t₄: Zeitpunkt für p4

- Δt: zeitliche Überschneidung

- p₁: Anfangsdruck
- p₂: Zwischen-Situation (Fig. 4)
- p₃: Übergangsdruck für 32
- p₄: Enddruck für Kupplung (Fig. 5)

## Patentansprüche

1. Kupplungs-Brems-Kombination
mit wenigstens einer ortsfesten (12) Bremsscheibe (10), mit mindestens einer drehbeweglich mit dem Antrieb (22) verbundenen Kupplungsscheibe (20) und mit einem dazwischen angeordneten Hauptkolben (31),
wobei der Hauptkolben (31) zwar durch eine Hauptfederbelastung (37) bestrebt ist in Andrucklage an die Bremsscheibe (10) zu kommen, aber durch Drucksteuerung (40) auf die Kupplungsscheibe (20) zu bewegbar ist,
mit einem durch das gleiche Druckmedium (40) relativ zum Hauptkolben (31) bewegbaren Hilfskolben (32), der seinerseits durch eine Hilfsfederkraft (38) belastet ist,
**dadurch gekennzeichnet ,**
**dass** - ohne Mediendruck - der Hilfskolben (31) aufgrund seiner Hilfsfederkraft (38) in Richtung der Bremsscheibe (10) vom Hauptkolben frei wegbewegbar ist,
**dass** - bei Erreichen eines bestimmten Anfangs-Mediendrucks (p₁₎ - zwar der Hauptkolben (31) sich auf die Kupplungsscheibe (20) zu bewegt, aber der Hilfskolben (32) von seiner Hilfsfederkraft (38) noch solange gegen die Bremsscheibe (10) gedrückt gehalten wird, bis - bei höherem Mediendruck (p₂) - der Hauptkolben (31) einen kupplungswirksamen Andruck auf die Kupplungsscheibe (20) ausübt,
und **dass** dann - bei weiter wachsendem Mediendruck - der Hilfskolben sich gegen dessen Hilfsfederkraft (38) von der Bremsscheibe (20) entfernt und auf den Hauptkolben (31) zu bewegt.

2. Kombination nach Anspruch 1, **dadurch gekennzeichnet, dass** bei vollem Mediendruck (p₄) der Hilfskolben (38) in den Hauptkolben (31) ganz eingefahren ist und weder auf die Bremsscheibe (10) noch auf die Kupplungsscheibe (20) wirkt.

3. Kombination nach Anspruch 1 oder 2, **dadurch gekennzeichnet, dass** die Hauptfederbelastung (37), die Hilfsfederkraft (38) sowie die Querschnitte des Haupt- und Hilfskolbens (31, 32) so zueinander bemessen sind,
dass beim Kupplungsvorgang und/oder beim Bremsvorgang der kupplungswirksame Andruck (t₂) des Hauptkolbens (31) auf die Kupplungsscheibe (20) sich zeitlich mit der Freigabe (t₃) der Bremsscheibe (20) durch den Hilfskolben (32) überschneidet (Δt).

4. Kombination nach einem der Ansprüche 1 bis 3, **dadurch gekennzeichnet, dass** der Hauptkolben (31) eine Schar von achsparallelen Bohrungen (33) aufweist, die zur Aufnahme und axialen Führung einer Schar von Hilfskolben (32) dienen,
und dass die Hilfskolben (32) - ohne Mediendruck - aus den Bohrungen (33) des Hauptkolbens (31) ausgefahren und - bei vollem Mediendruck (p₄) - in die Bohrungen (33) eingefahren sind.

5. Kombination nach Anspruch 4, **dadurch gekennzeichnet, dass** die Bohrungen (33) im Hauptkolben (31) in Richtung der Kupplungsscheibe (20) eine Schulter (34) zur Abstützung der die Hilfsfederkraft (38) erzeugenden Hilfsdruckfedern (36) aufweisen,
während das andere Federende dieser Hilfsdruckfedern (36) sich am Boden eines axialen Sacklochs im Hilfskolben (32) abstützt.
